# EUROPÄISCHE PATENTSCHRIFT

(11) **EP 0 770 459 B1**
(45) Veröffentlichungstag und Bekanntmachung des Hinweises auf die Patenterteilung: **28.02.2001**
(21) Anmeldenummer: 96113875.7
(22) Anmeldetag: 29.08.1996
(51) Int. Cl.: B26D 1/11, B26D 1/553, B26D 5/14

(54) **Vorrichtung und Verfahren zum Schneiden mittels parallel zueinander verschiebbaren Schneidrahmen**
Apparatus and Method for cutting with cutting frames moving in parallel
Dispositif et Méthode pour couper avec des cadres se déplaçant en parallèle

(30) Priorität: 04.09.1995 DE 19532570
(43) Veröffentlichungstag der Anmeldung: 02.05.1997
(73) Patentinhaber: Kurtz Altaussee GmbH, 8992 Altaussee (AT)
(72) Erfinder: Hollfelder, Heinz, Dipl.-Ing. (FH), 5582 St. Michael (AT); Syen, Andreas, 8993 Grundlsee (AT)
(74) Vertreter: Hufnagel, Walter, Dipl.-Ing., Dipl.-Wirtsch.-Ing.

(56) Entgegenhaltungen:
- EP-A- 0 209 662
- DE-A- 2 948 610
- DE-U- 8 513 086
- NL-A- 9 200 375

## Beschreibung

Die vorliegende Erfindung bezieht sich auf eine Vorrichtung und ein Verfahren zum Schneiden von mit wenigstens einem Draht oder einem anderen Schneidmittel zu schneidendem Material. In der EP-A1-0 030 013 ist einleitend angegeben, daß es zum

Schneiden von Kunststoffblöcken bekannt ist, eine Vielzahl von parallel zueinander angeordneten, elektrisch beheizten Drähten zusammen mit den Halterungseinrichtungen - die in der Regel in einem Rahmen angebracht sind - in schnelle Längsschwingungen zu versetzen, was aufgrund der relativ hohen Trägheitsmassen der aus den Drähten und den zugehörigen Halterungseinrichtungen gebildeten Einheit einen hohen Energieaufwand erfordert.

NL-A-9 200 375 offenbart eine Vorrichtung zum Schneiden von Material gemäß des Oberbegriffs des Anspruchs 7.

Mit der vorliegenden Erfindung soll die Aufgabe gelöst werden, ein Verfahren anzugeben und eine Vorrichtung zu schaffen, um die schnellen Längsschwingungen mit größerem Hub, mit größerer Hubfrequenz und mit möglichst geringem Energieaufwand durchführen zu können. Gleichzeitig soll mit dem erfindungsgemäßen Verfahren und der erfindungsgemäßen Vorrichtung bewirkt werden, auf das Gehäuse und auf das Fundament eine nur möglichst geringe Schwingungsenergie zu übertragen.

Gelöst wird diese Aufgabe durch die Verfahrensschritte des Anspruchs 1 bzw. die Merkmale des Anspruchs 7.

Die Erfindung zeichnet sich insbesondere dadurch aus, daß mit der Festlegung der einzelnen Parameter, wie elastische Kupplung und federnde Abstützung der beiden Rahmen, Massenausgleich bzw. Anpassung der Trägheitsmassen der beiden Rahmen und Hubfrequenz der Längsschwingung, ermöglicht wird, die auf das Gehäuse und das Fundament übertragene Schwingungsenergie sehr deutlich zu senken. Dies kann durch Berechnung der Parameter und gegebenenfalls durch deren empirische Abstimmung soweit optimiert werden, daß am Gehäuse bzw. am Fundament nur noch sehr geringe Erschütterungen mit der Hubfrequenz der Rahmen auftreten.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: eine Prinzipskizze einer Doppelschwingrahmen-Anordnung mit vier dargestellten Antriebsphasen,
- Fig. 2: eine Prinzipskizze, wie in Fig. 1, jedoch mit einer Antriebsphase und dementsprechend verschobenen Rahmen,
- Fig. 3: eine Draufsicht auf ein Ausführungsbeispiel eines Exzenterantriebs an einem Schneidrahmen und einem mit diesem gekoppelten zweiten Schneidrahmen,
- Fig. 4: die Ansicht der Stütze am zweiten Schneidrahmen von der Seite gemäß Ansichtspfeil I der Fig. 3,
- Fig. 5: eine Ansicht gemäß dem Schnitt II - II der Fig.4,
- Fig. 6: eine Ansicht gemäß dem Schnitt III - III der Fig. 3,
- Fig. 7: eine Seitenansicht der Vorrichtung,
- Fig. 8: eine Ansicht gemäß dem Schnitt IV - IV der Fig. 7,
- Fig. 9: eine Ansicht gemäß dem Schnitt V - V der Fig. 7,
- Fig. 10: eine Ansicht des Exzenterantriebs für die beiden Schneidrahmen, teilweise im Schnitt,
- Fig. 11: eine Ansicht gemäß dem Schnitt VI - VI der Fig. 10,
- Fig. 12: eine Detailansicht der federnden Kupplung der beiden Schneidrahmen mit dem starren Teil der Vorrichtung,
- Fig. 13: eine Ansicht gemäß dem Schnitt VII - VII der Fig. 12,
- Fig. 14: eine Ansicht des Details VIII der Fig. 13,
- Fig. 15: die Ansicht einer anderen Art der federnden Kupplung mit dem starren Teil des Schneidrahmens und
- Fig. 16: eine Prinzipskizze einer Vorrichtung mit nur einem Schneidrahmen gemäß dem Stand der Technik.

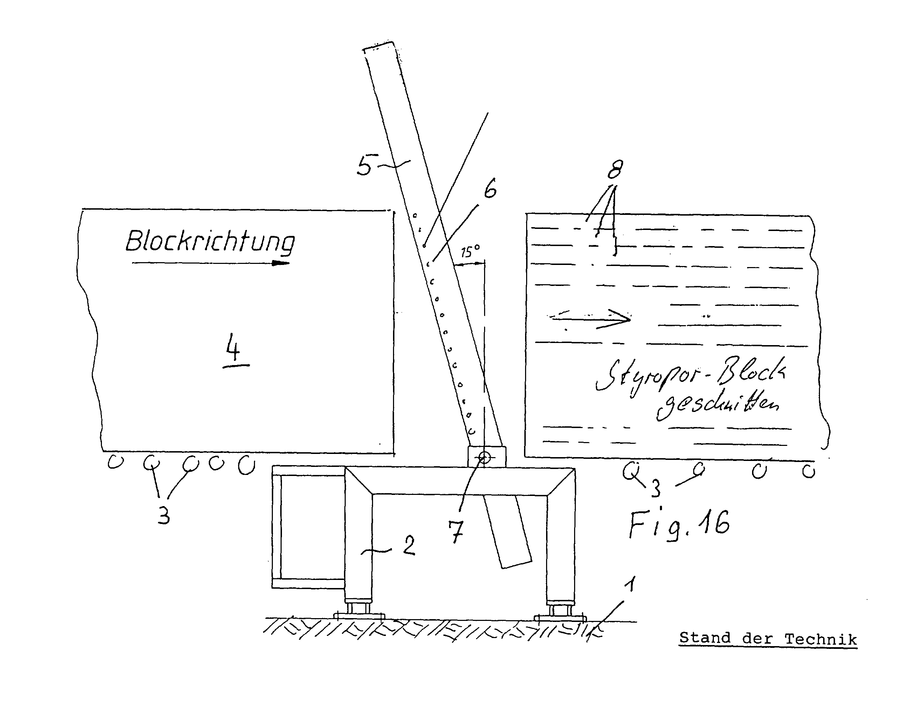

In Fig. 16 ist an einem Fundament 1 ein bügelförmiger Träger 2 befestigt. Links und rechts des Trägers 2 sind Transportrollen 3 vorgesehen, auf denen in der Zeichnung von links nach rechts ein Styroporblock 4 transportiert werden kann.

Am Träger 2 ist ein Schneidrahmen 5 mit senkrecht zur Papierebene verlaufenden, insbesondere elektrisch beheizbaren Drähten 6 an einem Schwenklager 7 schwenkbar gelagert. Der Schneidrahmen 5 ist zur Senkrechten etwa 15° zum einlaufenden Styroporblock 4 geneigt.

Beim Durchschieben des Styroporblocks 4 durch den Schneidrahmen 5 wird dieser durch die Drähte 6 in dem Abstand der Drähte 6 entsprechend dicke Platten 8 zerschnitten.

Es sind bereits Vorrichtungen dieser Art bekannt, bei denen der Schneidrahmen 5 in Richtung der Drähte hin- und herbewegt werden kann. Dadurch wird ein besserer Schnitt und eine größere Durchschubgeschwindigkeit des Styroporblocks 4 erreicht.

Infolge der großen Trägheitsmasse des Schneidrahmens 5 werden beim Hin- und Herbewegen desselben hohe Schwingungsenergien auf das Fundament 1 übertragen, auch wenn der Schneidrahmen 5 elastisch mit dem Fundament 1 bzw. dem Träger 2 verbunden ist. Aus diesem Grund ist sowohl die Größe des Hubes als auch die Hubfrequenz begrenzt.

Demgegenüber können beim erfindungsgemäßen Verfahren und der Vorrichtung gemäß der Erfindung ein wesentlich größerer Hub und eine höhere Hubfrequenz angewendet werden, ohne hohe Schwingungsenergien auf den Träger bzw. auf das Fundament zu übertragen.

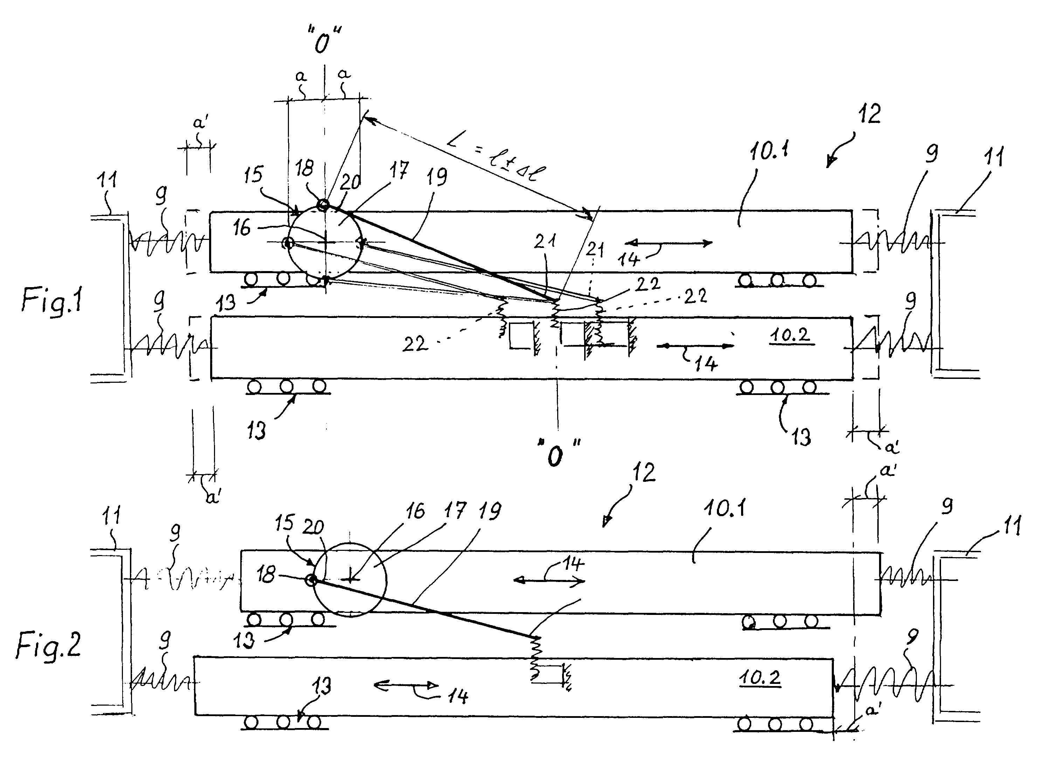

Gemäß den Prinzipskizzen der Fig. 1 und 2 sind parallel zueinander über Federelemente 9 zwei Schneidrahmen 10.1 und 10.2 in einem als starrer Rahmen 11 ausgebildeten starren Teil der Vorrichtung 12 angeordnet und in geeigneten Längslagern 13 in Richtung des Doppelpfeiles 14 geführt. Die Pfeilrichtung 14 ist zugleich die Längsrichtung der in den Schneidrahmen 10.1 und 10.2 eingespannten, hier nicht eingezeichneten Schneiddrähte oder anderer entsprechend ausgebildeter Schneidmittel.

Auf dem Schneidrahmen 10.1 ist ein Exzenterantrieb 15 vorgesehen, der aus einer um die Drehachse 16 drehbaren Scheibe 17 mit einer darauf um den Abstand a von der Drehachse 16 exzentrisch angebrachten Exzenterbolzen 18 besteht. Auf diesem ist eine Pleuelstange 19 mit dem einen Ende 20 drehbar gelagert. Das andere Ende 21 der Pleuelstange 19 ist über ein elastisches Kupplungsglied 22 mit dem zweiten Schneidrahmen 10.2 verbunden.

Die Wirkungsweise dieser "Doppelschneidrahmen-Anordnung" ist folgende:

Beim Drehen der Scheibe 17 nimmt der Exzenterbolzen 18 unter anderem die in Fig. 1 angedeuteten vier Extremstellungen ein. Das linke Ende 20 der Pleuelstange 19 macht daher eine Hubbewegung von 2a, wogegen das rechte Ende 21 infolge der Schräglage des Pleuels 19 zum zweiten Schneidrahmen 10.2 hin eine Hubbewegung von 2a' ausführt. Zu Beginn der Drehung der Scheibe 17 wird infolge der Massenträgheit der zu bewegenden Massen aus Schneidrahmen 10.1, 10.2, Exzenterantrieb 15, Reibung der Längslager 13, der Federelemente 9 und des elastischen Kupplungsgliedes 22 zunächst keiner der Schneidrahmen 10.1 bzw. 10.2 um den mechanisch maximal möglichen Hub a' längsverschoben. Vielmehr wird die Bewegung über das elastische Kupplungsglied 22 jeweils zunächst nicht voll übertragen. Die beiden Schneidrahmen 10.1 und 10.2 werden zueinander hin und voneinander wegbewegt.

Erst im eingeschwungenen Zustand schwingen die beiden Schneidrahmen 10.1 und 10.2 bei Optimierung der Vorrichtung genau gegenläufig, so daß praktisch keine Hubenergie auf den starren Rahmen 11 bzw. das Fundament 1 übertragen wird. Im eingeschwungenem Zustand wird vermutlich der Hub der Schneidrahmen 10.1 und 10.2 sogar größer sein als 2a' und eventuell sogar größer als 2a. Die Bewegung der beiden Schneidrahmen 10.1 und 10.2 im eingeschwungenen Zustand zeigt die Fig. 2.

Bedingung für eine optimale Funktion ist, daß der Exzenterhub 2a, die Hubfrequenz, also die Drehzahl der Scheibe 17, die Federkonstanten der Federn 9, des elastischen Kupplungsgliedes 22 sowie alle an der Längsbewegung in Richtung des Doppelpfeiles 14 teilnehmenden Massen so abgestimmt sind, daß eine gegenläufige, keine Schwingungsenergie abgebende Schwingung der Schneidrahmen 10.1 und 10.2 eintritt. Entsprechend müssen Maßnahmen vorgesehen sein, um die Trägheitsmasse des einen oder anderen Schneidrahmens 10.1 bzw. 10.2 verändern zu können. Ebenso kann, insbesondere über eine Elektronik, beispielsweise über einen Mikroprozessor mit Eingabemitteln, Speichern und Ausgabemitteln, die Hubfrequenz, d.h. die Drehzahl der Scheibe 17, auf eine Optimierung hin verstellbar ausgeführt werden.

Gegebenenfalls kann es zweckmäßig sein, die Exzentrizität des Exzenterbolzens 18 einstellbar auszuführen. Auch dies kann über Sensoren und eine Elektronik, wie beispielsweise über einen Mikroprozessor oder einen Computer, optimiert geschehen.

Die Steuerung erfolgt so, daß sich eine minimale Schwingungsübertragung einstellt.

Hierbei tritt ein wesentlicher Vorteil der Erfindung auf, nämlich größtmöglicher Hub bei sehr geringem Aufwand an Antriebsenergie, da bekanntlich ein schwingendes System eine minimale Energie aufnimmt.

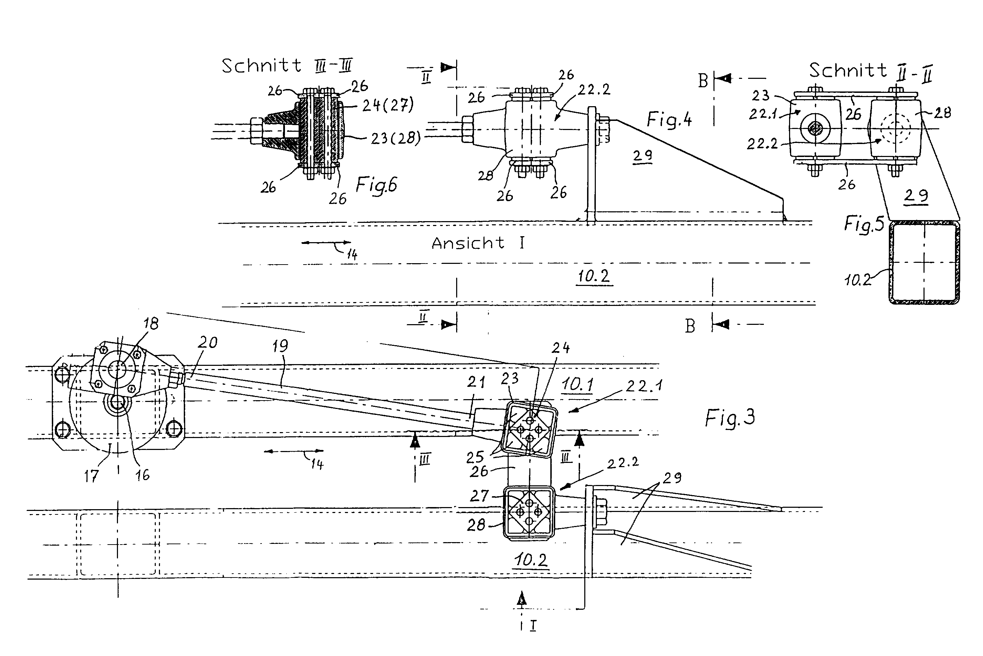

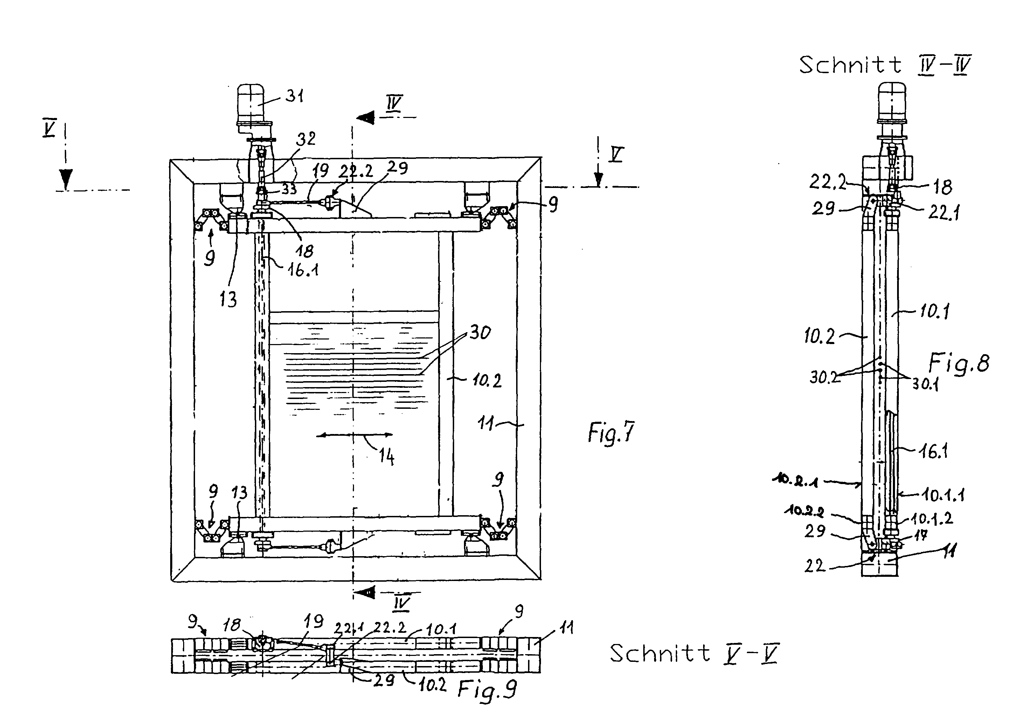

Die Fig. 3 bis 6 zeigen Details eines Ausführungsbeispiels eines Exzenterantriebs. Auf dem Schneidrahmen 10.1 ist die Scheibe 17 drehbar befestigt. Sie ist selbst über einen am Schneidrahmen 10.1 befestigten Antriebsmotor angetrieben oder sie wird, wie später anhand der Fig. 7 beschrieben, über einen stationären Motor angetrieben. Am Exzenterbolzen 18 ist die Pleuelstange 19 mit ihrem Ende 20 gelagert. Das andere Ende 21 derselben ist am Außenrahmen 23 eines elastischen Kupplungsgliedes 22.1 befestigt, dessen Innenvierkant 24 über Gummipuffer 25 mit dem Rahmen 23 verbunden ist. Der Innenvierkant 24 ist über Laschen 26 ( vgl. Fig. 4 bis 6 ) mit dem Innenvierkant 27 eines mit seinem Außenrahmen 28 an einem Lagerbock 29 befestigten gleichartigen elastischen Kupplungsgliedes 22.2 verbunden. Der Lagerbock 29 ist am Schneidrahmen 10.2 befestigt. Hierdurch treten weder an der Pleuelstange 19 noch am Lagerbock 29 Biegebelastungen auf.

In Fig. 7 ist eine Ansicht der Vorrichtung 12 in Durchschubrichtung dargestellt. Im starren Rahmen 11 sind über die Federelemente 9 die Schneidrahmen 10.1 und 10.2 federnd und über die Längslager 13 in Richtung der Schneiddrähte 30 in der Doppelpfeilrichtung 14 längsverschiebbar gelagert. Von den beiden Schneidrahmen 10.1 und 10.2 ist nur der in Papierebene vordere Schneidrahmen 10.2 mit dem Lagerbock 29 sichtbar.

Die Scheibe 17 wird von einem auf dem starren Rahmen 11 angeordneten Motor angetrieben. Zur Kraftübertragung dient eine Gelenkwelle 32 mit selbsttätigen Längenausgleich. Hierdurch ist es möglich, die Motorkraft in einfacher Weise auf die hin - und herschwingenden Schneidrahmen 10.1 und 10.2 zu übertragen.

Die Drehachse 16 der Scheibe 17 ist als Welle 16.1 durch den einen senkrechten Schenkel 10.1.1 zur Unterseite des unteren Rahmenbalkens 10.1.2 des Schneidrahmens 10.1 geführt. Dort sind ebenfalls eine Scheibe 17, ein Exzenterbolzen 18,eine Pleuelstange 19, ein elastisches Kupplungsglied 22 bzw. 22.1 und 22.2 und ein am anderen Schneidrahmen 10.2 angebrachter Lagerbock 29 vorgesehen. Hierdurch erfolgt der Antrieb der Schneidrahmen 10.1 und 10.2 ohne Gefahr zu laufen, daß diese verkanten. Auch erhält man eine gleichmäßigere Lagerbelastung, was die Lebensdauer der Vorrichtung wesentlich erhöht. Diese Konstruktion ist anhand der Fig. 8 erkennbar.

Die beiden Schneidrahmen 10.1 und 10.2 sind möglichst eng benachbart, so daß die Schneiddrähte 30.1 des einen Schneidrahmens 10.1 möglichst in derselben oder in einer eng benachbarten Ebene verlaufen wie die Schneiddrähte 30.2 des anderen Schneidrahmens 10.2, jedoch in der Höhe, beispielsweise um den halben Drahtabstand, versetzt.

Die Fig. 9 zeigt eine Draufsicht gemäß dem Schnitt V - V der Fig. 7.

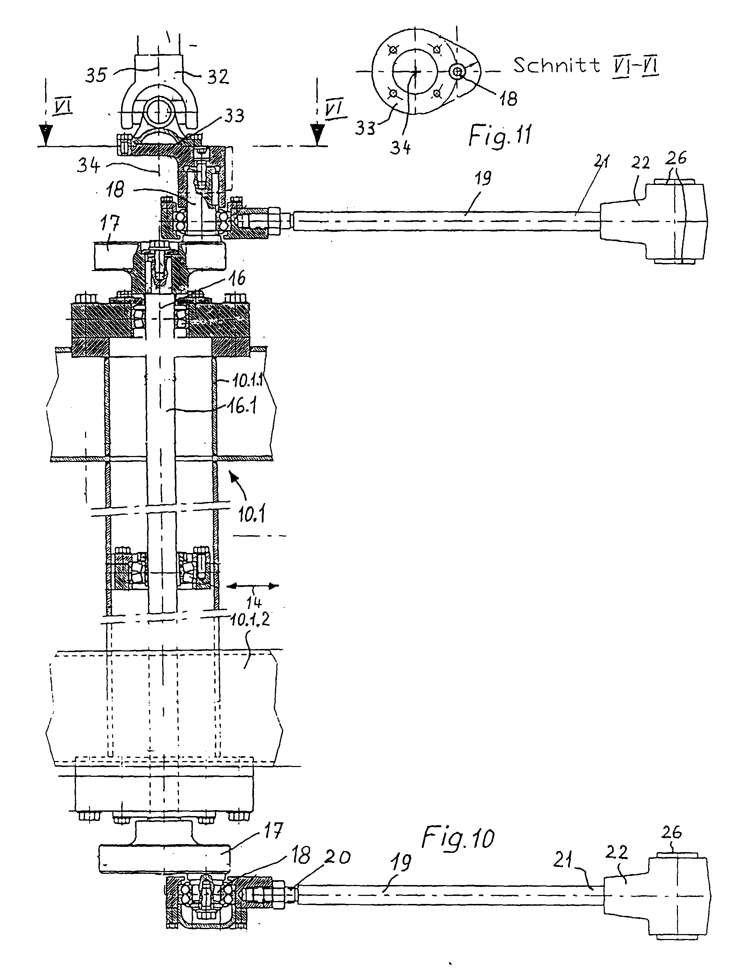

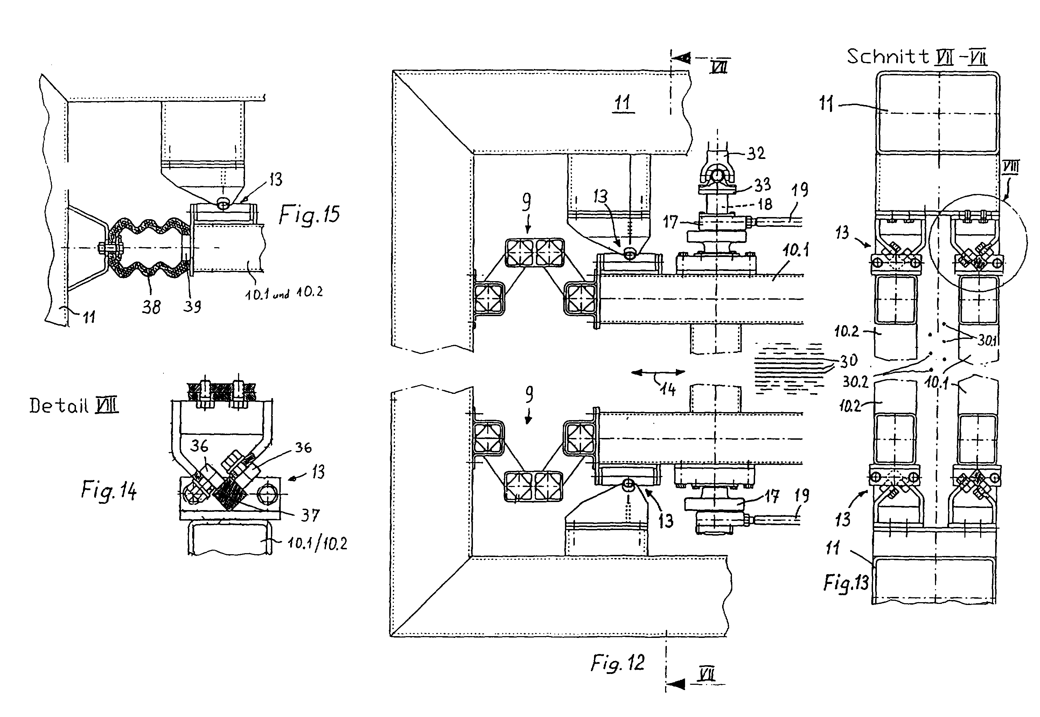

In Fig. 10 ist die Antriebseinheit mit der durch den Schenkel 10.1.1 hindurchgeführten Welle 16.1 mit der Scheibe 17, dem Exzenterbolzen 18 und der Pleuelstange 19 in größerem Maßstab dargestellt. Hierdurch ist ersichtlich, daß zwischen dem Exzenterbolzen 18 und den Enden 20 der Pleuelstangen 19 je ein Lager, z.B. ein Doppelkugellager, vorgesehen ist. Auch ist ersichtlich, daß der Exzenterbolzen 18 der Antriebsseite mit einer in Fig. 11 in Draufsicht dargestellten Triebscheibe 33 in Wirkverbindung steht, deren Drehachse 34 in Ruhestellung mit der Drehachse 16 der Scheibe 17 und der Drehachse 35 der Gelenkwelle 32 der Vorrichtung 12 fluchtet.

Die Fig. 12, 13 und 14 zeigen die mögliche Anordnung und Ausführung der Längslager 13 mit Kurvenrollen 36, die auf einem Vierkantstab 37 aus Stahl abrollen können.

In Fig. 15 ist eine Ausführung der Federelemente 9 als Gummihohlfeder 38 dargestellt. Sie ist vorzugsweise mit einer Luftausgleichsöffnung 39 versehen, so daß das innere Luftpolster als Dämpfungs-Verzögerung wirkt.

Bei einem ausgeführten Modell konnte bei unbeachtlicher Schwingungsübertragung an den starren Rahmen eine Hubgeschwindigkeit von 0,8 m/sec für die beiden gegenläufig schwingenden Schneidrahmen 10.1 und 10.2 erreicht werden. Dies ist der etwa 4- bis 5-fache Wert der bisher mit einem Schneidrahmen bzw. einem schwingenden Schneidrahmen erreichten Hubgeschwindigkeit.

Durch den möglichen größeren Hub können die zu schneidenden Blöcke, z.B. Styroporblöcke, schneller durchgeschoben werden. So war bei sehr gut ausgebildeten Schnittflächen eine 30 %-ige Erhöhung der Durchschubgeschwindigkeit ohne weiteres möglich. Es könnte auch mit der bisher üblichen Durchschubgeschwindigkeit gearbeitet werden, wobei es dann möglich wäre, die Stromstärke der beheizten Schneiddrähte erheblich zu verringern. Auch hierdurch kann also eine Energieeinsparung erreicht werden.

Der erfindungsgemäße Doppelschneidrahmen in Form der zwei gegenläufig schwingenden Schneidrahmen 10.1 und 10.2 kann auch zum Schneiden von Holz, Stein, Beton oder dgl. eingesetzt werden. Hierfür sind die Drähte beispielsweise mit Diamant- oder Hartmetallsplittern besetzt.

Die Schneidmittel 30; 30.1 und 30.2 können auch als schnell rotierbare bzw. rotierende Drähte ausgeführt sein. Die Drähte können bei Bedarf auch zusätzlich gekühlt werden.

Das Verfahren und die Vorrichtung gemäß der Erfindung sind auch für andere Schneidmittel, z.B. Sägeblätter, wie sie beispielsweise in Gattersägen verwendet werden, geeignet.

Auch ist ein Einsatz zum Schneiden von Blöcken 4 aus mineralischem Material, insbesondere aus geschäumtem mineralischem Material, bevorzugt möglich.

Beim Schneiden von geschäumten Kunststoffblöcken, insbesondere EPS-Blöcken, erhält man bei höherer, beispielsweise 30% höherer Durchschubgeschwindigkeit, auch dann sehr gute Schnittflächen, wenn die Blöcke ungleichmäßig getrocknet sind.

Das erfindungsgemäße Verfahren und die vorstehend beschriebene Vorrichtung können auch in bereits vorhandenen Schneidanlagen eingesetzt bzw. verwendet und damit deren Effektivität erheblich gesteigert werden.

Selbstverständlich ist es auch möglich, den gegenseitigen Abstand der Schneidmittel automatisch elektronisch oder ferngesteuert verstellbar zu machen.

## Patentansprüche

1. Verfahren unter Verwendung der Vorrichtung (12) nach Anspruch 7, zum Schneiden von Material, insbesondere von kompaktem oder geschäumtem Kunststoff, mittels eines längsgestreckten Schneidmittels, insbesondere wenigstens eines elektrisch beheizten Drahtes zum Schneiden von Styroporblöcken, der bzw. die in einem Schneidrahmen eingespannt ist bzw. sind, der in einem starren Teil der Anlage oder Vorrichtung in Längsrichtung des bzw. der Schneidmittel längsverschiebbar gelagert und über eine Antriebseinrichtung für den Schneidvorgang hin- und herbewegt wird, wobei
- in einem starren Teil (11) der Schneidanlage oder der Vorrichtung (12) zwei in Richtung der Schneideinrichtung bzw. der Schneideinrichtungen (30) längsverschiebbar gelagerte Schneidrahmen (10.1, 10.2) parallel zueinander angeordnet werden,
- zwischen jedem der beiden Schneidrahmen (10.1, 10.2) und dem starren Teil (11) jeweils wenigstens ein Federelement (9) vorgesehen wird,
- an einem ersten der beiden Schneidrahmen (10.1 bzw. 10.2) ein Exzenterantrieb (15) mit senkrecht zur Längsverschieberichtung (14) verlaufender Drehachse (16) angeordnet wird,
- durch den Exzenterantrieb (15) über wenigstens ein elastisches Kupplungsglied (22; 22.1, 22.2) der zweite Schneidrahmen (10.2 bzw. 10.1) angetrieben wird und
- die Parameter: Exzenterhub (a), Hubfrequenz, Federkonstanten der Federelemente (9) und des bzw. der elastischen Kupplungsgliedes(er) (22; 22.1, 22.2), sowie die schwingenden Trägheitsmassen, insbesondere der Schneidrahmen (10.1, 10.2), derart aneinander angepaßt werden, daß die beiden Schneidrahmen (10.1, 10.2) derart gegenläufig zueinander schwingen, daß keine oder nur eine minimale Schwingungsenergie auf den starren Teil (11) und/oder auf das Fundament (1) übertragen werden.

2. Verfahren nach Anspruch 1, dadurch gekennzeichnet, daß der auf dem einen Schneidrahmen (10.1 bzw. 10.2) angebrachte Exzenterantrieb (15) durch einen am starren Teil (11) vorgesehenen Antrieb (31) über eine sich selbsttätig längseinstellende Gelenkwelle (32) angetrieben wird.

3. Verfahren nach Anspruch 1 oder 2, dadurch gekennzeichnet, daß der zweite Schneidrahmen (10.2 bzw. 10.1) vom Exzenterantrieb (15) über eine an einem Exzenterbolzen (18) des Exzenterantriebs (15) drehbar gelagerte Pleuelstange (19) angetrieben wird.

4. Verfahren nach einem der Ansprüche 1 bis 3, dadurch gekennzeichnet, daß das vom Exzenterantrieb (15) wegstehende Ende (21) der Pleuelstange (19) den zweiten Schneidrahmen (10.2 bzw 10.1) über das elastische Kupplungsglied (22; 22.1, 22.2) antreibt.

5. Verfahren nach einem der Ansprüche 1 bis 4, dadurch gekennzeichnet, daß die Steuerung der Anlage- oder Vorrichtungs-Parameter über einen Mikroprozessor mit zugeordneten Eingabe-, Speicher- und Ausgabemitteln gesteuert wird.

6. Verfahren nach Anspruch 5, dadurch gekennzeichnet, daß die Anlage oder Vorrichtung (12) automatisch auf minimale Übertragung von Schwingungen auf den starren Teil (11) und/oder das Fundament (1) gesteuert wird.

7. Vorrichtung (7) zum Schneiden von Material (4), insbesondere von kompaktim oder geschäumten Kunststoff mit wenigstens einem längsgestreckten Schneidmittel (30), insbesondere einem elektrisch beheizten Draht (30.1, 30.2) zum Schneiden von Styroporblöcken (4), das bzw. die in einen in Richtung (14) der Längserstreckung des bzw. der Schneidmittel (30) hin- und herbewegbar gelagerten Schneidrahmen (10.1, 10.2) eingespannt ist bzw. sind
- wobei zwei längsverschiebbare, parallel zueinander angeordnete Schneidrahmen (10,1, 10.2) vorgesehen sind,
- wobei die Schneidrahmen (10.1, 10.2) über je wenigstens ein Federelement (9) mit einem starren Teil (11) der Schneidanlage oder Vorrichtung (12) verbunden sind, dadurch gekennzeichnet,
- daß an einem ersten Schneidrahmen (10.1 bzw. 10.2) ein Exzenterantrieb (15) mit einer senkrecht zur Richtung (14) der Verschiebung der Schneidrahmen (10.1, 10.2) bzw. der Schneidmittel (30) verlaufenden Drehachse (16) vorgesehen ist und
- daß der Exzenterantrieb (15) über wenigstens ein elastisches Kupplungsglied (22; 22.1, 22.2) mit dem zweiten Schneidrahmen (10.2 bzw. 10.1) elastisch gekuppelt ist.

8. Vorrichtung nach Anspruch 7, dadurch gekennzeichnet, daß zwischen Exzenterantrieb (15) und elastischem Kupplungsglied (22; 22.1, 22.2) eine Pleuelstange (19) vorgesehen ist.

9. Vorrichtung nach Anspruch 7 oder 8, dadurch gekennzeichnet, daß die Parameter: Exzenterhub (a), Hubfrequenz, Federkonstanten der Federelemente (9) und des bzw. der elastischen Kupplungsgliedes(er) (22; 22.1, 22.2), sowie die schwingenden Trägheitsmassen so eingestellt sind, daß die beiden Schneidrahmen (10.1, 10.2) im eingelaufenen Betriebszustand gegenläufig zueinander schwingen.

10. Vorrichtung nach einem der Ansprüche 7 bis 9, dadurch gekennzeichnet, daß die Einstellung so gewählt ist, daß die auf das starre Teil (11) und/oder die Anlage oder Vorrichtung (12) übertragbare Schwingungsenergie ein Mimimum ist.

11. Vorrichtung nach einem der Ansprüche 7 bis 10, dadurch gekennzeichnet, daß die beiden Schneidrahmen (10.1, 10.2) einander so eng benachbart angeordnet sind, daß die Schneidmittel (30.1, 30.2) der beiden Schneidrahmen (10.1, 10.2) in derselben oder in zwei eng banachbarten Ebenen zueinander verlaufen.

12. Vorrichtung nach einem der Ansprüche 7 bis 11, dadurch gekennzeichnet, daß die Schneidrahmen (10.1, 10.2) zur Senkrechten um etwa 10° bis 20°, insbesondere etwa um 15°, zum einlaufenden zu schneidenden Material hin geneigt sind.

13. Vorrichtung nach einem der Ansprüche 7 bis 12, dadurch gekennzeichnet, daß als Federelemente (9) Gummihohlfedern (38) vorgesehen sind.

14. Vorrichtung nach einem der Ansprüche 7 bis 13, dadurch gekennzeichnet, daß die Drehachse (16) des Exzenterantriebs (15) als Welle (16.1) zum gegenüberliegenden Rahmenbalken (10.1.2) geführt ist und dort mit einem weiteren Exzenterantrieb (15) in Wirkverbindung gebracht ist, über den der entsprechende Rahmenbalken (10.2.2) des anderen Schneidrahmens (10.2) antreibbar ist.

15. Vorrichtung nach Anspruch 14, dadurch gekennzeichnet, daß die Welle (16.1) durch den einen senkrechten Schenkel (10.1.1) des Schneidrahmens (10.1) verläuft.

16. Vorrichtung nach einem der Ansprüche 7 bis 15, dadurch gekennzeichnet, daß ein Antrieb (31) für den Exzenterantrieb (15) am starren Teil (11) angebracht ist und dieser mit dem Exzenterantrieb (15) über eine sich im Betrieb selbst längsverstellende Gelenkwelle (32) gekuppelt ist.

17. Vorrichtung nach einem der Ansprüche 7 bis 16, dadurch gekennzeichnet, daß die Achsen des Antriebs (31), der Gelenkwelle (32) und des Exzenterantriebs (15) in Ruhestellung der Schneidrahmen (10.1, 10.2) miteinander fluchten.

18. Vorrichtung nach einem der Ansprüche 7 bis 17, dadurch gekennzeichnet, daß die Schneidmittel (30; 30.1, 30.2) aus elektrisch beheizten bzw. beheizbaren Drähten bestehen.

19. Vorrichtung nach einem der Ansprüche 7 bis 17, dadurch gekennzeichnet, daß die Schneidmittel (30; 30.1, 30.2) als schnell rotierbare bzw. rotierende Drähte ausgeführt sind.

20. Vorrichtung nach einem der Ansprüche 7 bis 18, dadurch gekennzeichnet, daß die Schneidmittel mit Schneidpartikeln beschichtet sind.

21. Vorrichtung nach einem der Ansprüche 7 bis 18 oder 20, dadurch gekennzeichnet, daß die Schneidmittel als Sägeblätter ausgebildet sind.

22. Vorrichtung nach einem der Ansprüche 7 bis 21, dadurch gekennzeichnet, daß sie zum Schneiden von Blöcken (4) aus Kunststoff, insbesondere aus geschäumtem Kunststoff, einsetzbar ist.

23. Vorrichtung nach einem der Ansprüche 7 bis 21, dadurch gekennzeichnet, daß sie zum Schneiden von Blöcken (4) aus mineralischem Material, insbesondere aus geschäumtem mineralischem Material, einsetzbar ist.

## Claims

1. Method using the device (12) according to claim 7, for cutting material, in particular compact or foamed plastic, by means of an elongated cutting means, in particular at least one electrically heated wire for cutting polystyrene foam blocks, which is clamped in a cutting frame which is mounted displaceable longitudinally in the longitudinal direction of the cutting means in a rigid part of the installations or device and is moved to and fro by means of a driving device for the cutting operation, wherein
- two cutting frames (10.1, 10.2) mounted displaceable longitudinally in the direction of the cutting device or cutting devices (30) are disposed parallel to one another in a rigid part (11) of the cutting installation or the device (12),
- at least one spring element (9) is provided in each case between each of the two cutting frames (10.1, 10.2) and the rigid part (11),
- an eccentric drive (15) with a pivot axis (16) running perpendicular to the direction of longitudinal displacement (14) is disposed on a first of the two cutting frames (10.1 or 10.2),
- the second cutting frame (10.2 or 10.1) is driven by the eccentric drive (15) through at least one elastic coupling member (22; 22.1, 22.2), and
- the parameters eccentric stroke (a), stroking frequency, spring constants of the spring elements (9) and of the elastic coupling member or members (22; 22.1, 22.2) and the oscillating inertial masses, in particular of the cutting frames (10.1, 10.2), are adapted to one another such that the two cutting frames (10.1, 10.2) oscillate in opposite directions to one another such that only minimal or no oscillation energy is transmitted to the rigid part (11) and/or to the foundation (1).

2. Method according to claim 1, characterised in that the eccentric drive (15) mounted on one cutting frame (10.1 or 10.2) is driven by a drive (31) provided on the rigid part (11) through a cardan shaft (32) which automatically adjusts longitudinally.

3. Method according to claim 1 or 2, characterised in that the second cutting frame (10.2 or 10.1) is driven by the eccentric drive (15) through a connecting rod (19) mounted pivotable on an eccentric pin (18) of the eccentric drive (15).

4. Method according to one of claims 1 to 3, characterised in that the end (21) of the connecting rod (19) remote from the eccentric drive (15) drives the second cutting frame (10.2 or 10.1) through the elastic coupling member (22; 22.1, 22.2).

5. Method according to one of claims 1 to 4, characterised in that the controller of the installation or device parameters is controlled by means of a microprocessor with associated input, memory and output means.

6. Method according to claim 5, characterised in that the installation or device (12) is automatically controlled for minimal transmission of oscillations to the rigid part (11) and/or the foundation (1).

7. Device (12 ) for cutting material, in particular compact or foamed plastic, with at least one elongated cutting means (30), in particular an electrically heated wire (30.1, 30.2) for cutting polystyrene foam blocks (4), which is clamped in a cutting frame (10.1, 10.2) mounted so that it can be moved to and fro in the direction (14) of the longitudinal extension of the cutting means (30),
- wherein two longitudinally displaceable cutting frames (10.1, 10.2) disposed parallel with one another are provided,
- wherein the cutting frames (10.1, 10.2) are connected to a rigid part (11) of the cutting installation or device (12) in each case by means of at least one spring element (9), characterised in that
- on a first cutting frame (10.1 or 10.2) an eccentric drive (15) is provided with a pivot axis (16) running perpendicular to the direction (14) of displacement of the cutting frames (10.1, 10.2) or the cutting means (30), and
- the eccentric drive (15) is coupled elastically to the second cutting frame (10.2 or 10.1) by means of at least one elastic coupling member (22; 22.1, 22.2).

8. Device according to claim 7, characterised in that a connecting rod (19) is provided between the eccentric drive (15) and the elastic coupling member (22; 22.1, 22.2).

9. Device according to claim 7 or 8, characterised in that the parameters eccentric stroke (a), stroking frequency, spring constants of the spring elements (9) and the elastic coupling member or members (22; 22.1, 22.2) and the oscillating inertial masses are set so that the two cutting frames (10.1, 10.2) oscillate in opposite directions to one another in the run-in operating state.

10. Device according to one of claims 7 to 9, characterised in that the setting is chosen so that the oscillation energy transmittable to the rigid part (11) and/or the installation or device (12) is minimal.

11. Device according to one of claims 7 to 10, characterised in that the two cutting claims (10.1, 10.2) are disposed neighbouring one another so closely that the cutting means (30.1, 30.2) of the two cutting frames (10.1, 10.2) run in the same or in two closely neighbouring planes.

12. Device according to one of claims 7 to 11, characterised in that the cutting frames (10.1, 10.2) are inclined to the vertical by approximately 10° to 20°, in particular by approximately 15°, to the material running in to be cut.

13. Device according to one of claims 7 to 12, characterised in that hollow rubber springs (38) are provided as spring elements (9).

14. Device according to one of claims 7 to 13, characterised in that the pivot axis (16) of the eccentric drive (15) is run as a shaft (16.1) to the opposite frame beam (10.1.2) and there brought into operative connection with a further eccentric drive (15) by means of which the corresponding frame beam (10.2.2) of the other cutting frame (10.2) can be driven.

15. Device according to claim 14, characterised in that the shaft (16.1) runs through one vertical limb (10.1.1) of the cutting frame (10.1).

16. Device according to one of claims 7 to 15, characterised in that a drive (31) for the eccentric drive (15) is mounted on the rigid part (11) and this is coupled with the eccentric drive (15) by means of a cardan shaft (32) which automatically adjusts longitudinally in operation.

17. Device according to one of claims 7 to 16, characterised in that the axes of the drive (31), of the cardan shaft (32) and of the eccentric drive (15) line up with one another in the resting position of the cutting frames (10.1, 10.2).

18. Device according to one of claims 7 to 17, characterised in that the cutting means (30; 30.1, 30.2) consist of electrically heated or heatable wires.

19. Device according to one of claims 7 to 17, characterised in that the cutting means (30; 30.1, 30.2) are embodied as rapidly rotatable or rotating wires.

20. Device according to one of claims 7 to 18, characterised in that the cutting means are coated with cutting particles.

21. Device according to one of claims 7 to 18 or 20, characterised in that the cutting means are embodied as saw blades.

22. Device according to one of claims 7 to 21, characterised in that it can be used for cutting blocks (4) of plastic, in particular of foamed plastic.

23. Device according to one of claims 7 to 21, characterised in that it can be used for cutting blocks (4) of mineral material, in particular of foamed mineral material.

## Revendications

1. Procédé utilisant le dispositif (12) décrit dans la revendication 7, pour couper des matériaux en particulier des plastiques compacts ou en mousse au moyen d'un outil de coupe de grande longueur, en particulier d'au moins un fil chauffé électriquement pour couper des blocs de styropor, et tendu(s) dans un cadre de découpe lui-même disposé dans une partie rigide de l'installation ou du dispositif, et mobile dans la direction longitudinale du ou des outils de coupe, et commandé en va-et-vient par un dispositif d'entraînement pour l'opération de coupe, dans lequel
- deux cadres de coupe (10.1, 10.2) sont disposés parallèlement en translation longitudinale possible en direction du ou des outils de coupe (30) dans une partie rigide (11) de l'installation ou du dispositif de coupe (12),
- entre chacun des deux cadres de coupe (10.1, 10.2) et la partie rigide (11) est monté au moins un élément à ressort (9),
- sur le premier des deux cadres de coupe (10.1 ou 10.2) est montée une commande par excentrique (15) avec un axe de rotation (16) perpendiculaire à la direction de translation longitudinale (14),
- le deuxième cadre de coupe (10.2 ou 10.1) est entraîné par la commande à excentrique (15) par l'intermédiaire d'au moins un organe d'accouplement élastique (22; 22.1, 22.2) du deuxième cadre de coupe (10.2 ou 10.1), et
- les paramètres : course de l'excentrique (a), fréquence de la course, constantes des éléments à ressort (9) et du ou des organe(s) d'accouplement élastique(s) (22 ; 22.1, 22.2) ainsi que les masses d'inertie oscillantes, en particulier des cadres de coupe (10.1, 10.2), sont agencés les uns par rapport aux autres de façon à ce que les deux cadres de coupe (10.1, 10.2) oscillent en direction opposée l'un par rapport à l'autre en engendrant une quantité d'énergie transmise à la partie rigide (11) ou au bâti (1) nulle ou réduite au minimum.

2. Procédé selon la revendication 1,
caractérisé en ce que
la commande à excentrique (15) montée sur l'un des cadres de coupe (10.1 ou 10.2) est entraînée par l'intermédiaire d'un arbre articulé (32) à réglage longitudinal automatique, par un moteur (31) monté sur la partie rigide (11).

3. Procédé selon la revendication 1 ou 2,
caractérisé en ce que
le deuxième cadre de coupe (10.2 ou 10.1) est entraîné par l'excentrique (15) par l'intermédiaire d'une bielle (19) montée en rotation possible sur un boulon (18) de l'excentrique (15).

4. Procédé selon l'une quelconque des revendications 1 à 3,
caractérisé en ce que
l'extrémité (21) de la bielle (19) s'écartant de la commande par excentrique (15), entraîne le deuxième cadre de coupe (10.2 ou 10.1) par l'intermédiaire de l'organe d'accouplement élastique (22 ; 22.1, 22.2).

5. Procédé selon l'une quelconque des revendications 1 à 4,
caractérisé en ce que
la commande des paramètres de l'installation ou du dispositif de coupe est gérée par un microprocesseur comportant des moyens d'entrée, de mémoire et de sortie.

6. Procédé selon la revendication 5,
caractérisé en ce que
l'installation ou le dispositif de coupe (12) est entraîné automatiquement en engendrant des vibrations minimum sur la partie rigide (11) et/ou sur le bâti (1).

7. Dispositif (12) pour couper des matériaux, en particulier des matériaux plastiques compacts ou en mousse, par au moins un outil de coupe longitudinale (30), en particulier un fil chauffé électriquement (30.1, 30.2) pour couper des blocs de styropor (4), tendus dans des cadres de coupe (10.1, 10.2) pouvant se déplacer dans un sens et dans l'autre dans la direction (14) longitudinale du ou des outils de coupe (30), dans lequel :
- deux cadres de coupe (10.1, 10.2) sont disposés en parallèle, et peuvent se déplacer longitudinalement,
- les cadres de coupe (10.1, 10.2) étant reliés à une partie rigide (11) de l'installation ou du dispositif de coupe (12), par l'intermédiaire d'au moins un élément à ressort(9),
caractérisé en ce que
- sur l'un des cadres de coupe (10.1 ou 10.2), est montée une commande par excentrique (15) munie d'un axe de rotation (16) disposé perpendiculairement à la direction (14) du déplacement des cadres de coupe (10.1, 10.2) et de l'outil de coupe (30), et
- la commande par excentrique (15) est reliée élastiquement par l'intermédiaire d'au moins un élément d'accouplement élastique (22 ; 22.1, 22.2) au deuxième cadre de coupe (10.2 ou 10.1).

8. Dispositif selon la revendication 7,
caractérisé en ce qu'
entre la commande par excentrique (15) et l'organe d'accouplement élastique (22 ; 22.1, 22.2), est montée une bielle (19).

9. Dispositif selon l'une quelconque des revendications 7 ou 8,
caractérisé en ce que
les paramètres : course de l'excentrique (a), fréquence de la course, constante élastique de l'élément à ressort (9) ou des éléments d'accouplement élastiques (22 ; 22.1, 22.2) ainsi que les masses d'inertie oscillantes sont fixées de façon telle que les deux cadres de coupe (10.1, 10.2) oscillent, en fonctionnement, en sens inverse l'un par rapport à l'autre.

10. Dispositif selon l'une quelconque des revendications 7 à 9,
caractérisé en ce que
le réglage est effectué de façon que l'énergie vibratoire transmise à la partie rigide (11) et/ou à l'installation ou au dispositif de coupe (12) soit la plus faible possible.

11. Dispositif selon l'une quelconque des revendications 7 à 10,
caractérisé en ce que
les deux cadres de coupe (10.1, 10.2) sont disposés si étroitement l'un par rapport à l'autre que les outils de coupe (30.1, 30.2) des deux cadres de coupe (10.1, 10.2) se déplacent dans le même plan ou dans deux plans étroitement rapprochés.

12. Dispositif selon l'une quelconque des revendications 7 à 11,
caractérisé en ce que
les cadres de coupe (10.1, 10.2) sont inclinés l'un par rapport à l'autre d'un angle de 10 à 20°, de préférence environ 15°, pour faciliter la pénétration dans le matériau à couper.

13. Dispositif selon l'une quelconque des revendications 7 à 12,
caractérisé en ce que
les éléments à ressort (9) sont des ressorts creux en caoutchouc (38).

14. Dispositif selon l'une des revendications 7 à 13,
caractérisé en ce que
l'axe de rotation (16) de la commande par excentrique (15) assure la fonction d'arbre (16.1) de déplacement de la poutre du cadre (10.1.2), et de là, est mis en liaison avec une autre commande par excentrique (15), par l'intermédiaire de laquelle est entraînée la poutre correspondante (10.2.2) de l'autre cadre de coupe (10.2).

15. Dispositif selon la revendication 14,
caractérisé en ce que
l'arbre (16.1) se déplace à travers l'un des montants verticaux (10.1.1) du cadre de coupe (10.1).

16. Dispositif selon l'une quelconque des revendications 7 à 15,
caractérisé en ce que
sur la partie rigide (11) est monté un moteur (31) de l'excentrique (15), et ce moteur est accouplé à l'excentrique (15) par l'intermédiaire d'un arbre articulé (32) se réglant lui-même en longueur en cours de fonctionnement.

17. Dispositif selon l'une quelconque des revendications 7 à 16,
caractérisé en ce que
les axes du moteur (31), de l'arbre articulé (32) et de la commande de l'excentrique (15) sont alignés dans la position de repos des cadres de coupe (10.1, 10.2).

18. Dispositif selon l'une quelconque des revendications 7 à 17,
caractérisé en ce que
les outils de coupe (30; 30.1, 30.2) sont constitués par des fils chauffés ou chauffables électriquement.

19. Dispositif selon l'une quelconque des revendications 7 à 17,
caractérisé en ce que
les outils de coupe (30; 30.1, 30.2) sont réalisés sous forme de fils mis ou pouvant être mis en rotation rapide.

20. Dispositif selon l'une quelconque des revendications 7 à 18,
caractérisé en ce que
les outils de coupe sont revêtus de particules coupantes.

21. Dispositif selon l'une quelconque des revendications 7 à 18, ou 20,
caractérisé en ce que
les outils sont des lames de scie.

22. Dispositif selon l'une quelconque des revendications 7 à 21,
caractérisé en ce qu'
il peut être utilisé pour couper des blocs (4) de matières plastiques, en particulier, des plastiques en mousse.

23. Dispositif selon l'une quelconque des revendications 7 à 21,
caractérisé en ce qu'
il peut être utilisé pour couper des blocs (4) en matériaux minéraux, en particulier en matériaux minéraux en mousse.
